# EUROPEAN PATENT SPECIFICATION

(11) **EP 3 343 382 B1**
(45) Date of publication and mention of the grant of the patent: **19.02.2020**
(21) Application number: 16207041.1
(22) Date of filing: 28.12.2016
(51) Int. Cl.: G06F 13/14, H04W 24/10, H04W 52/02, H04W 28/06, H04W 80/02

(54) **MOBILE DEVICE AND METHOD USING CONSOLIDATED TRANSACTIONS**
MOBILE VORRICHTUNG UND VERFAHREN MIT VERWENDUNG KONSOLIDIERTER TRANSAKTIONEN
DISPOSITIF MOBILE ET PROCEDE UTILISANT DES TRANSACTIONS CONSOLIDÉES

(43) Date of publication of application: 04.07.2018
(73) Proprietor: Intel IP Corporation, Santa Clara, CA 95054 (US)
(72) Inventor: YOUSEF, Amr, 81476 Munich (DE); KHODIER, Moustafa, 82008 Unterhaching (DE); NICKISCH, Dirk, 85667 Oberpframmern (DE); ITJESHORST, Ralf, 85469 Walpertskirchen (DE)
(74) Representative: Lambsdorff & Lange Patentanwälte Partnerschaft mbB

(56) References cited:
- US-A1- 2009 140 844
- US-A1- 2011 022 699

## Description

### FIELD

The disclosure relates to a mobile device and a method for operating a mobile device using consolidated transactions between a physical layer (PHY) system processing physical layer related operations and a higher layer system such as a cellular protocol stack (CPS) system processing operations related to layers above the physical layer. The disclosure particularly relates to low throughput use cases CPS activities consolidation through PHY.

### BACKGROUND

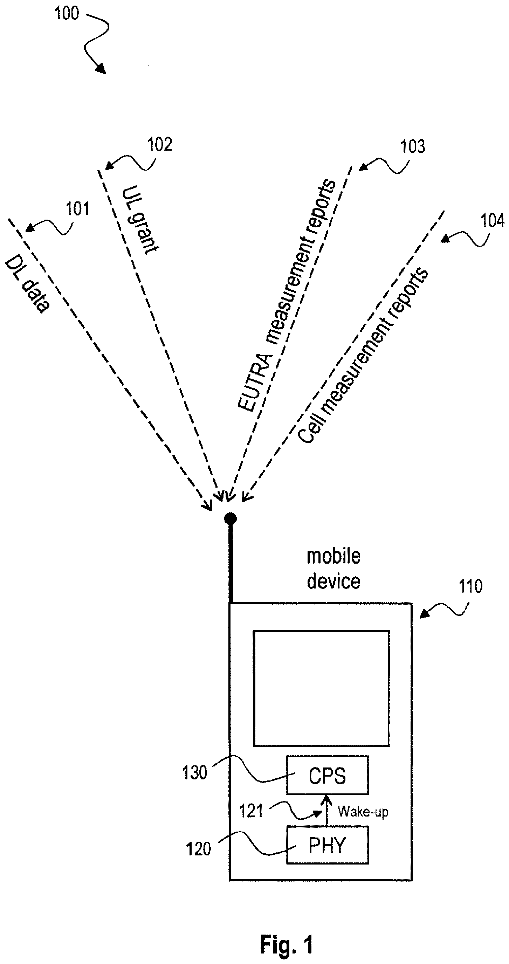

In Wireless Networks connected mode low throughput use cases (like VoLTE, web-browsing, social media applications like Facebook, chatting applications), CPS "Cellular/wireless Protocol Stack" CP "Control Plane" and DP "Data Plane" activities are occurring with low frequency. Figure 1 shows a mobile device connected to a wireless network to perform a variety of different activities 101, 102, 103, 104. Table 1 shows statistics for frequency of activities triggered for VoLTE calls in field testing in different locations.

**Table 1: LTE VoLTE Use Cases PHY-CPS Transactions Frequency**

| Activity Name | Activity Frequency per millisecond |
|---|---|
| DL Data Handling | 17.48 |
| UL Grant Handling | 17.94 |
| Serving cell measurement report | 34.70 |
| EUTRA measurements report | 50.80 |

To start these activities, transactions from PHY system 120 to CPS system 130 is needed. Based on the CPS System 120 state, a wake up 121 may be needed to initiate transaction and provide corresponding information/message. The CPS System 130 can include CPS cores, external memory, HW accelerators and other HW modules serving cores, etc.

Due to low frequency of PHY-CPS transactions in mobile networks low throughput use cases, the probability of having these activities aligned (i.e. being triggered by PHY in same subframe) is low, which results in many cases to dedicated wake ups 121 and active time for CPS system 130 per activity. Since in low throughput use cases expectations are to have low rate of DP & CP activities and these are most common use cases for mobile terminals users, these use cases are always having aggressive low power consumption targets. However, having dedicated CPS system wake ups and active time per activity will have considerable impact on power consumption. Hence, there is a need to provide a concept for reducing power in mobile devices, in particular in low throughput use cases as described above.

Document US 2011/022699 A1 discloses a network device including a PHY device and a MAC controller. The MAC controller may implement OSI layer 2 and above, and the PHY device may implement the operability and functionality of OSI layer 1 or the physical layer. The MAC controller may communicate with the PHY device via an interface. The PHY device may communicate a generated wake state idle symbol to the MAC controller. The MAC controller may establish a wake-up interval based on the communicated wake state idle symbol.

### SUMMARY

The object to be solved is to provide a concept for reducing power in mobile devices. This object is achieved by a mobile device and a method for operating a mobile device having the features of the independent claims.

Various embodiments provide a mobile device.

The mobile device comprises: a physical layer (PHY) system configured to process physical layer related operations; a higher layer system configured to process operations related to layers above the physical layer; and a communication channel established between the PHY system and the higher layer system for reporting a plurality of transactions to the higher layer system, wherein the plurality of transactions comprise at least one first type of latency critical transaction and at least one second type of non-latency critical transaction, wherein the PHY system is configured to consolidate the plurality of transactions based on a single wake-up message directed to the higher layer system, and wherein the PHY system is configured to delay reporting a non-latency critical transaction until reporting a latency critical transaction. The mobile device mentioned in this paragraph provides a first example.

The higher layer system may comprise a cellular protocol stack (CPS) system. The features mentioned in this paragraph in combination with the first example provide a second example.

The wake-up message may be configured to wake-up the higher layer system for processing the consolidated plurality of transactions. The features mentioned in this paragraph in combination with any one of the first example to the second example provide a third example.

A timing response requirement for the latency-critical transaction may be more strict than a timing response requirement for the non-latency critical transaction. The features mentioned in this paragraph in combination with the first example provide a fourth example.

The higher layer system may be configured to control the PHY system enabling or disabling consolidation of the plurality of transactions. The features mentioned in this paragraph in combination with any one of the first example to the fourth example provide a fifth example.

The higher layer system may be configured to enable the PHY system consolidating transactions of a specific transaction type. The features mentioned in this paragraph in combination with any one of the first example to the fifth example provide a sixth example.

The higher layer system may be configured to indicate a delay value applicable for the specific transaction type to the PHY system. The features mentioned in this paragraph in combination with the sixth example provide a seventh example.

The PHY system may be configured to activate consolidation of transactions of the specific transaction type based on the delay value indicated by the higher layer system. The features mentioned in this paragraph in combination with the seventh example provide an eighth example.

The delay value may be changeable in run-time either by the PHY system or by the higher layer system. The features mentioned in this paragraph in combination with any one of the seventh example to the eighth example provide a ninth example.

The PHY system may be configured to cache the transactions of the specific transaction type until a delaying condition is satisfied. The features mentioned in this paragraph in combination with any one of the sixth example to the ninth example provide a tenth example.

The delaying condition may comprise at least one of the following: an elapse of a delay time specified by the delay value for the specific transaction type, a latency critical transaction required to be reported to the higher layer system, a power down requirement for the PHY system. The features mentioned in this paragraph in combination with the tenth example provide an eleventh example.

The PHY system may be configured to report the cached transactions of the specific transaction type to the higher layer system when the delaying condition is fulfilled. The features mentioned in this paragraph in combination with any one of the tenth example to the eleventh example provide a twelfth example.

Various embodiments provide a method for operating a mobile device.

The method for operating a mobile device comprises: initiating a physical layer (PHY) system for processing physical layer related operations; initiating a higher layer system for processing operations related to layers above the physical layer; establishing a communication channel between the PHY system and the higher layer system for reporting a plurality of transactions from the PHY system to the higher layer system, wherein the plurality of transactions comprise at least one first type of latency critical transaction and at least one second type of non-latency critical transaction; consolidating the plurality of transactions based on a single wake-up message directed to the higher layer system; and delaying reporting a non-latency critical transaction until reporting a latency critical transaction. The method for operating a mobile device mentioned in this paragraph provides a thirteenth example.

The higher layer system may comprise a cellular protocol stack (CPS) system. The features mentioned in this paragraph in combination with the thirteenth example provide a fourteenth example.

The wake-up message may be configured to wake-up the higher layer system for processing the consolidated plurality of transactions. The features mentioned in this paragraph in combination with any one of the thirteenth example to the fourteenth example provide a fifteenth example.

A timing response requirement for the latency-critical transaction may be more strict than a timing response requirement for the non-latency critical transaction. The features mentioned in this paragraph in combination with any one of the thirteenth example to the fifteenth example provide a sixteenth example.

The method for operating a mobile device may include: controlling an enabling or disabling of the consolidation of the plurality of transactions. The features mentioned in this paragraph in combination with any one of the thirteenth example to the sixteenth example provide a seventeenth example.

The method for operating a mobile device may include: enabling the consolidation of transactions of a specific transaction type. The features mentioned in this paragraph in combination with any one of the thirteenth example to the seventeenth example provide an eighteenth example.

The method for operating a mobile device may include: indicating a delay value applicable for the specific transaction type to the PHY system. The features mentioned in this paragraph in combination with the eighteenth example provide a nineteenth example.

The method for operating a mobile device may include: activating consolidation of transactions of the specific transaction type based on the indicated delay value. The features mentioned in this paragraph in combination with the nineteenth example provide a twentieth example.

The delay value may be changeable in run-time. The features mentioned in this paragraph in combination with any one of the nineteenth example to the twentieth example provide a twenty-first example.

The method for operating a mobile device may include: caching the transactions of the specific transaction type until a delaying condition is satisfied. The features mentioned in this paragraph in combination with any one of the eighteenth example to the twenty-first example provide a twenty-second example.

The delaying condition may comprise at least one of the following: an elapse of a delay time specified by the delay value for the specific transaction type, a latency critical transaction required to be reported to the higher layer system, a power down requirement for the PHY system. The features mentioned in this paragraph in combination with the twenty-second example provide a twenty-third example.

The method for operating a mobile device may include: reporting the cached transactions of the specific transaction type to the higher layer system when the delaying condition is fulfilled. The features mentioned in this paragraph in combination with any one of the twenty-second example to the twenty-third example provide a twenty-fourth example.

Various embodiments provide a computer readable non-transitory medium on which computer instructions are stored which when executed by a computer cause the computer to perform the method of any one of the thirteenth example to the twenty-fourth example.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1 is a schematic diagram illustrating a mobile device 110 connected to a wireless network to perform a variety of different activities 101, 102, 103, 104.
Fig. 2 is a block diagram illustrating the high level architecture 200 for CPS 130 and PHY 120 system.
Fig. 3 is a message sequence chart 300 for transaction sequence between PHY 120 and CPS 130 systems.
Fig. 4 is a schematic diagram of an example message sequence 400 for not aligned PHY-CPS CP/DP transactions.
Fig. 5 is a schematic diagram 500 illustrating consolidation of PHY latency non-critical to latency critical transactions according to the disclosure.
Fig. 6 is a schematic diagram 600 illustrating parallel processing for consolidated PHY transactions to latency critical transactions according to the disclosure.
Fig. 7 is a message sequence diagram 700 illustrating CPS system enabling/disabling delay for CP transaction according to the disclosure.
Fig. 8 is a schematic diagram 800 illustrating a sequence of actions for PHY-CPS transactions delaying according to the disclosure.
Fig. 9 is a schematic diagram illustrating a PHY algorithm (or method) 900 for delaying DL data transactions to CPS according to the disclosure.
Fig. 10 is a schematic diagram 1000 illustrating an Example for aligning DL data transaction with UL transaction assuming single core CPS system according to the disclosure.
Fig. 11 is a schematic diagram 1100 illustrating an exemplary DL data transaction having delay timer expiry without occurrence of latency critical transaction according to the disclosure.
Fig. 12 is a histogram 1200 illustrating an analysis of PHY-CPS DL data transactions.
Fig. 13 is a schematic diagram 1300 illustrating an exemplary Consolidation of CP transaction to DP transaction according to the disclosure.
Fig. 14 is a schematic diagram 1400 illustrating an exemplary latency non-critical CP transaction delay time elapse according to the disclosure.
Fig. 15 is a histogram 1500 illustrating an analysis of PHY-CPS CP transactions.
Fig. 16 is a schematic diagram illustrating a mobile device 1600 according to the disclosure consolidating transactions between PHY system and higher layer system based on a single wake-up message.
Fig. 17 is a schematic diagram illustrating a method 1700 for operating a mobile device according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
- UE:: User Equipment, cellular handset
- LTE:: Long Term Evolution
- VoLTE:: Voice over LTE
- PHY:: Physical Layer
- CPS:: Cellular Protocol Stack
- CP:: Control Plane
- DP:: Data Plane
- UL:: Uplink
- DL:: Downlink
- FW:: Firmware
- HW:: Hardware
- SW:: Software

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in wireless communication networks, in particular communication networks based on high speed communication standards from the 802.11 family according to the WiFi alliance, e.g. 802.11ad and successor standards. The methods are also applicable for mobile communication standards such as LTE, in particular LTE-A and/or OFDM and successor standards such as 5G. The methods and devices described below may be implemented in electronic devices such as cellular handsets, mobile or wireless devices (or mobile stations or User Equipments (UE)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

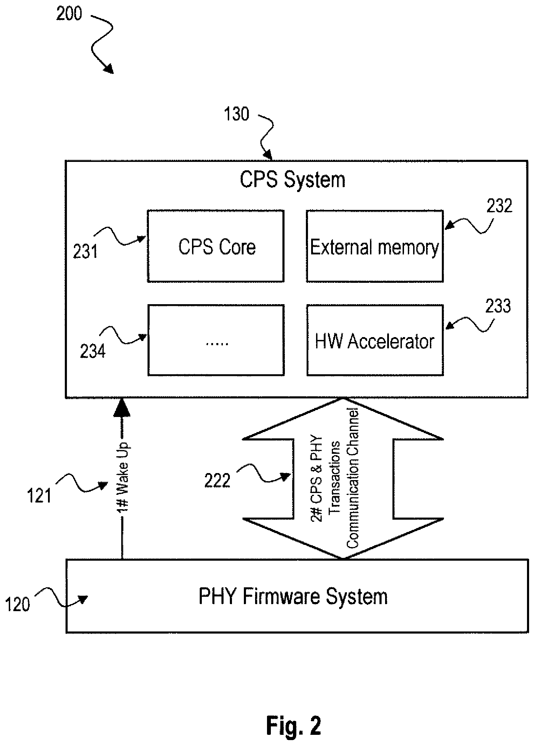

Fig. 2 is a block diagram illustrating the high level architecture 200 for CPS 130 and PHY 120 system.

The PHY system 120 can process layer 1 operations, i.e. on the physical layer while the CPS system processes higher layer operations, for example operations related to layers 2 (data link layer), 3 (network layer) and above of the OSI (open system interconnection) model. The cellular protocol stack (CPS) system is an implementation of a cellular networking *protocol suite.* The terms are often used interchangeably. Strictly speaking, the suite is the definition of the protocols of the cellular network, and the stack is the software implementation of them.

The CPS system 130 includes a CPS core 231, an external memory 232, a hardware (HW) accelerator 233 and other HW modules 234 serving cores. The communication channel 222 between PHY system 120, also referred to as PHY Firmware system hereinafter, is used to transport transactions between PHY system 120 and CPS system 130. The communication channel 222 may be a bidirectional channel. A wake-up message 121 can wake-up the CPS system for processing the messages transported from PHY system 120 to CPS system. 130.

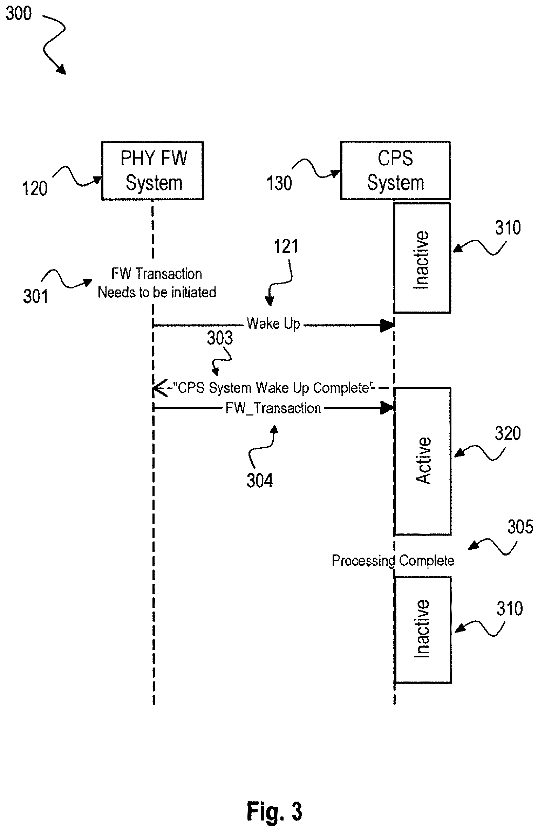

Fig. 3 is a message sequence chart 300 for transaction sequence between PHY 120 and CPS 130 systems. For starting activities between PHY system 120 and CPS system 130, as described above with respect to Fig. 1, transaction from PHY system 120 to CPS system 130 needs to be initiated 301. Based on CPS System state 310, 320, wake up 121 may be needed to initiate transaction 304 and provide corresponding information/message.

When a FW transaction needs to be initiated 301 to CPS system that is in inactive state 310, a wake-up 121 is sent from PHY system 120 to CPS system 130 to bring CPS system 130 in active state 320. The wake-up 121 may be acknowledged 303 by CPS system 130 before CPS system 130 changes to active state 320. When processing is complete 305, PHY system 130 may change again to inactive state 310.

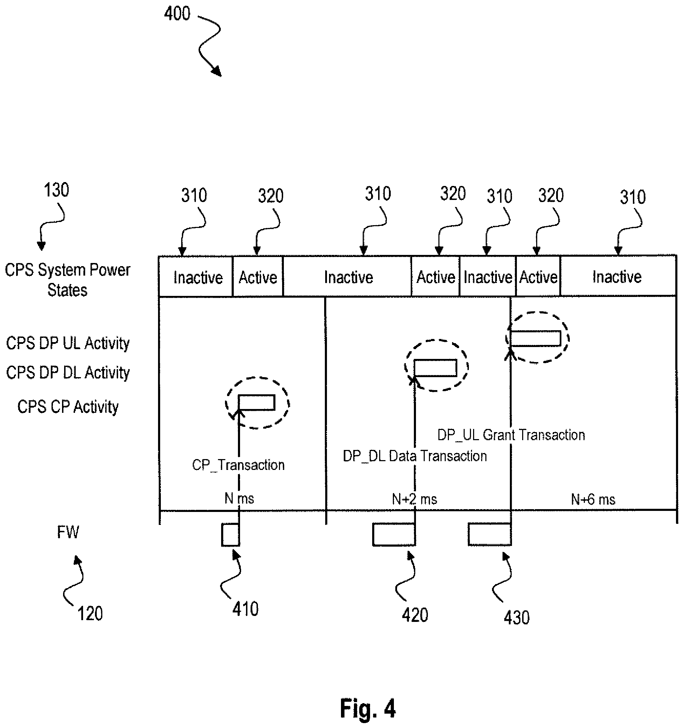

Fig. 4 is a schematic diagram of an example message sequence 400 for not aligned PHY-CPS CP/DP transactions.

A CP transaction 410 is initiated by the FW, i.e. the PHY system 120 at time N ms. This CP transaction 410 is transferred to CPS system 130 resulting in a wake-up of CPS system 130 (change from state inactive 310 to state active 230) and CPS CP activity to process the CP transaction 410. After processing of the CP transaction 410 the CPS system 130 returns to state inactive 310. The same procedure is repeated for a DP_DL data transaction 420 at time N+2 ms and for a DP_UL Grant transaction 430 at time N+6 ms.

Since in low throughput use cases as depicted in Fig. 4 expectations are to have low rate of DP & CP activities and these are most common use cases for mobile terminals users, these use cases are always having aggressive low power consumption targets. However, having dedicated CPS system wake ups and active time per activity will have considerable impact on power consumption.

To reduce power consumption, a framework as described in the following is applied for wireless systems connected mode operations (i.e. connection is established) through which PHY transactions to CPS across multiple frames can be consolidated in single CPS system activation/wake up.

For such a framework, the following definitions may apply: The PHY System includes all modules involved in wireless systems physical layer related operations. The CPS System includes Cellular/Wireless protocol stack system performing L2 and above operations for wireless system. PHY-CPS Transactions include all transactions initiated from PHY to CPS system. PHY-CPS Transaction Types are related to the following: In wireless systems, transactions from PHY to CPS in connected mode can be classified into the two categories: Latency Critical Transactions and Non-latency Critical Transactions. Latency Critical Transactions are type of PHY-CPS transactions that have hard processing latency requirements on CPS, one example for such transactions is processing of UL grants received from networks where processing by CPS in most of wireless systems needs to be done as soon as possible to meet timing requirements for sending data on air by physical layer. Non-latency Critical Transactions are type of PHY-CPS transactions that have no hard latency requirements on CPS and slight delay in processing of such transactions by CPS shouldn't impact wireless system behavior, one example for such transactions is measurement reports. The PHY-CPS Transaction Delay is the maximum allowed delay to start CPS processing for PHY-CPS transaction.

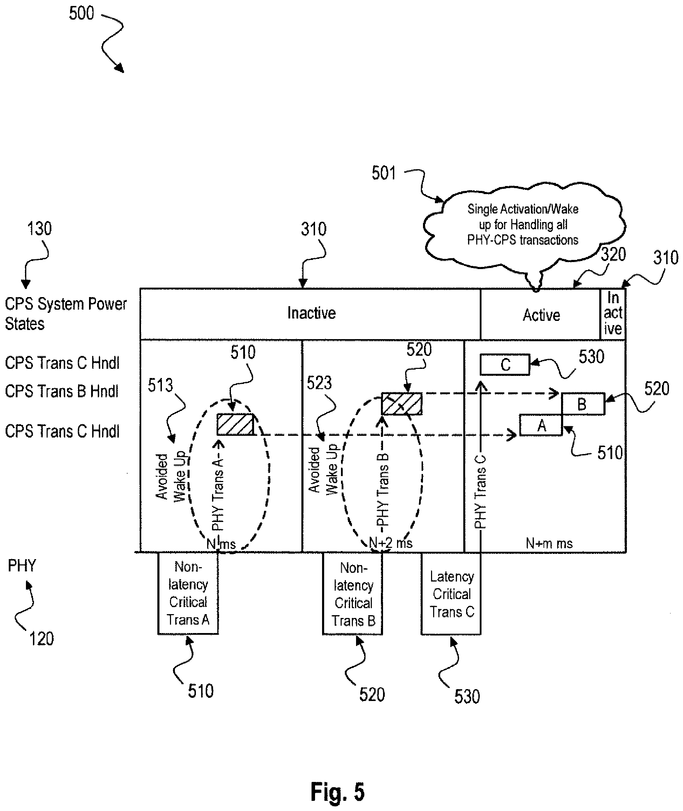

The target of such a framework is to delay reporting of non-latency critical PHY-CPS transactions by PHY until next latency critical PHY-CPS transaction to have single activation/wake up for CPS system handling both non-latency and latency critical transaction from PHY as shown in Figure 5.

Fig. 5 is a schematic diagram 500 illustrating consolidation of PHY latency non-critical to latency critical transactions according to the disclosure.

A non-latency critical PHY transaction A, 510 is initiated by the PHY system 120 at time N ms. This non-latency critical transaction A, 510 is delayed until time N+m ms. A wake-up message is avoided 513. The same procedure is repeated for a non-latency critical PHY transaction B, 520 which is also delayed unit time N+m ms and for which transmitting a wake-up is avoided 523. At time N+m a latency critical PHY transaction C, 530 is initiated by the PHY system 120. For this transaction C, 530 a wake-up message is transmitted to CPS system 130 resulting in a wake-up of CPS system 130 (change from state inactive 310 to state active 230) and CPS CP activity to process the CP transactions. The two non-latency critical transactions A, 510 and B, 520 are consolidated with the latency critical transaction C, 530 and transmitted as a consolidated transaction 530, 510, 520 to the CPS system 130. After processing these consolidated transaction 530, 510, 520 the CPS system 130 returns to state inactive 310. Thus, only a single activation or wake-up is required for handling all PHY-CPS transactions 501.

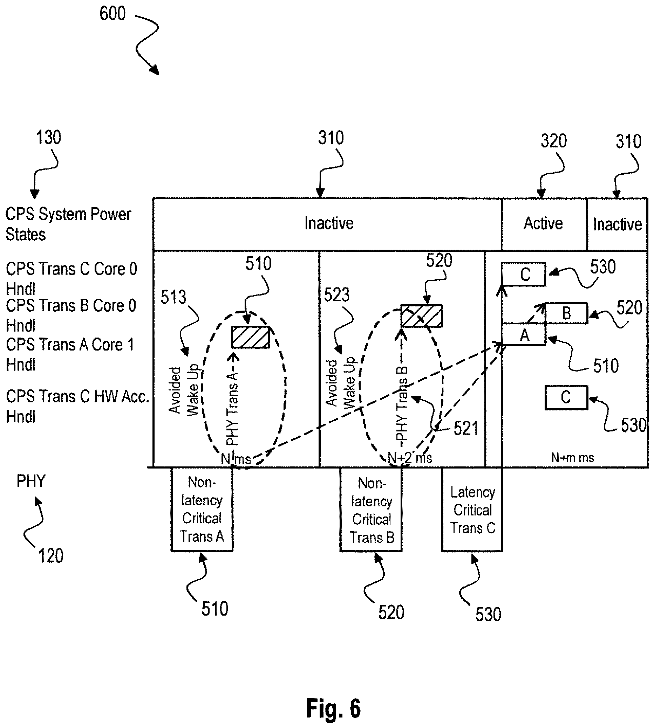

In multi core or SW/HW partitioned CPS systems, this framework reduces CPS system overall active time by increasing CPS system resources utilization through parallelizing PHY-CPS transactions activities processing, e.g. as described in the example below with respect to Fig. 6.

Fig. 6 is a schematic diagram 600 illustrating parallel processing for consolidated PHY transactions to latency critical transactions according to the disclosure.

In the Example depicted in Fig. 6, it is assumed that Transaction C, 530 on CPS 130 needs software (SW) operations on Core0 (processing core no. 0) for 100 microseconds and hardware (HW) operations (e.g. data ciphering on HW accelerator) for 100 microseconds. Transaction B, 520 may be executed on Core 0 for 100 microseconds. Transaction A, 510 may be executed on Core 1 (processing core no. 1) for 100 microseconds.

Thus, the CPS overall active time without PHY-CPS transactions consolidation would be 400 microseconds. By applying the disclosed PHY-CPS transactions consolidation framework, the overall CPS active time can be reduced to 200 microseconds which is a 50% reduction in active time and accordingly CPS system power consumption.

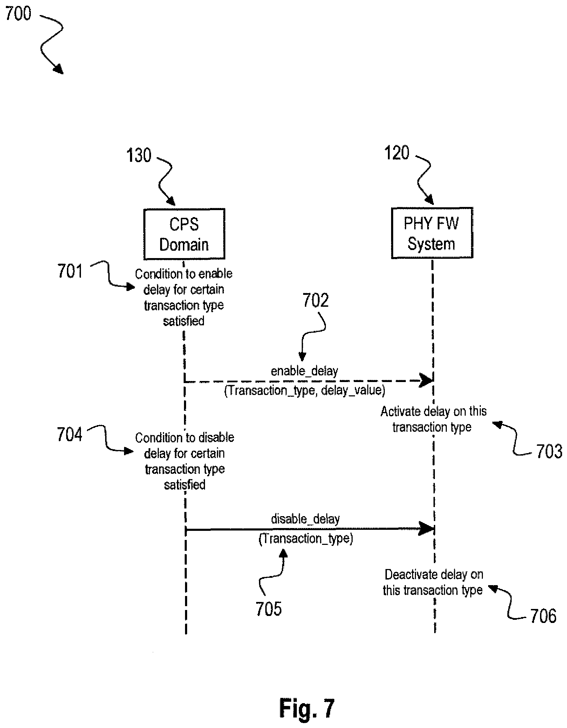

The above described framework may further define the further items: PHY-CPS transactions can be classified into latency critical and non-critical transactions based on timing response requirements. For each latency non-critical transaction type (e.g. serving cell measurement report), an allowed max PHY-CPS Transaction Delay that may be applied by the PHY can be defined. The PHY-CPS Transaction Delay value can be changed in run-time based on different factors (e.g. serving cell power value) either directly by PHY or through CPS. A value of zero may be the default value which means that delay shall be disabled. An example for an algorithm that can be applied to define a maximum allowed delay value for a specific transaction type is described below with respect to Fig. 7.

Fig. 7 is a message sequence diagram 700 illustrating CPS system enabling/disabling delay for CP transaction according to the disclosure. This figure provides an example for a use case where CPS is enabling and disabling the delay on PHY-CPS transaction.

If at CPS domain 130 the condition to enable delay for certain transaction type is satisfied 701, an "enable_delay" message 702 is transferred from CPS domain 130 to PHY FW system 120 indicating the PHY system 120 to enable delay with a specific transaction type and a specific delay value as included in the "enable_delay" message 702. Responsive to this message 703 the PHY system 120 activates delay with the specific delay value on the specific transaction type 703.

If at CPS domain 130 the condition to disable delay for certain transaction type is satisfied 704, a "disable_delay" message 705 is transferred from CPS domain 130 to PHY FW system 120 indicating the PHY system 120 to disable delay with the specific transaction type as included in the "disable_delay" message 705. Responsive to this message 705 the PHY system 120 deactivates delay on the specific transaction type 706.

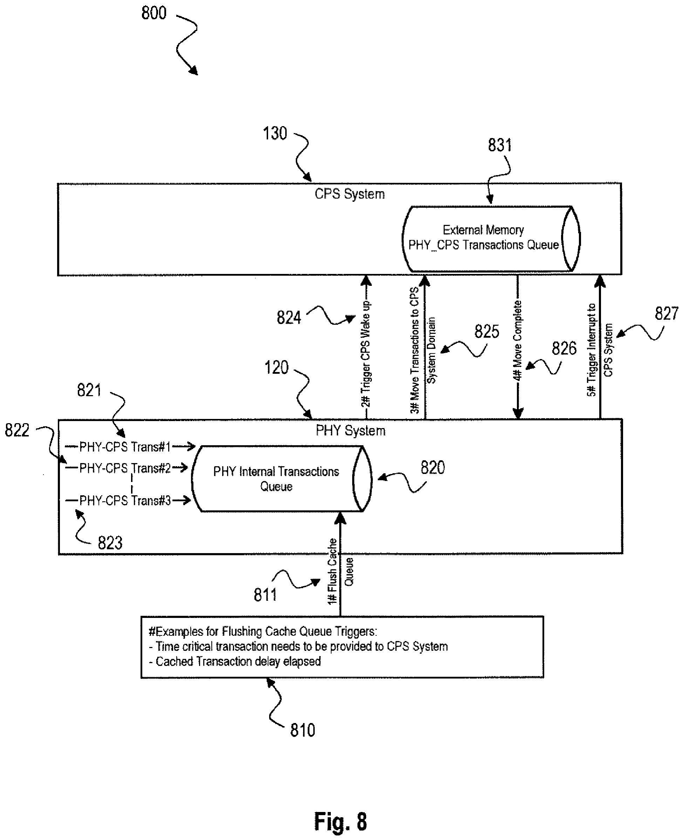

Fig. 8 is a schematic diagram 800 illustrating a sequence of actions for PHY-CPS transactions delaying according to the disclosure.

Once PHY-CPS transaction required to be initiated and for which delay is enabled and delay conditions are satisfied, PHY shall cache/save transaction internally until any of stop delaying conditions are satisfied. Examples for stop delay conditions are the following: Any of delayed CPS-PHY transactions delay time elapse; Latency critical transaction required to be initiated to CPS system; PHY system needs to be powered down. Once any of stop delay conditions is satisfied, PHY shall trigger wake up for CPS system and then provide all pending PHY-CPS transactions to CPS system. Fig. 8 provides an example how such a framework can be realized.

The PHY system 120 may include a PHY internal transactions queue 820 to queue the various delayed transactions 821, 822, 823. When a flush cache queue event 811 is triggered, for example by the following events 810: time critical transaction needs to be provided to CPS system; or cached transaction delay elapsed, a wake up signal 824 is transferred to CPS system 130 and the cached transactions 821, 822, 823 are moved 824 to CPS system, e.g. to an external memory PHY_CPS transactions queue 831 included in the CPS system 130. After moving is complete, a move complete 826 message is transferred from CPS system 130 to PHY system 120 and the PHY system 120 may trigger an interrupt 827 to the CPS system 130.

Applying this framework will decrease the number of dedicated CPS system wake ups for PHY-CPS transactions and reduce the overall active time needed by CPS system for handling these transactions which accordingly will result in considerable reduction on power consumption by CPS system.

The following section addresses LTE low throughput use cases as an example on how this framework can be realized and gains that can be achieved. The following section addresses in details two types of consolidation to be applied: 1) Consolidating DL Data latency non-critical transactions; and 2) Consolidating periodic Control Plane latency non-critical transactions. The algorithms described in this section for defining maximum allowed delay values on transactions are generic and can be applied on any other wireless protocols (e.g. 3G) with consideration of adjustment on conditions.

The first type of 1) Consolidating DL Data latency non-critical transactions is described in the following.

PHY-CPS LTE UL grant transactions (i.e. LTE UL grant handling) may have high latency requirements which can't be delayed but LTE DL data transactions may have more relaxed latency requirements based on radio bearers QoS "Quality of Service" configuration. As described above, the idea is to avoid having dedicated CPS wake ups for DL data transactions by applying configurable delay on these transactions to be consolidated with next latency critical transaction (e.g. UL Grant transaction). An exemplary algorithm by which such a delay can be applied is described below.

CPS shall configure PHY with list of Logical channel IDs having latency non-critical requirements and max allowed delay value per each. CPS-PHY interface to provide such configuration can be as follows: cps_phy_dl_data_delay_config(list of latency non-critical logical channel IDs, list of non-critical logical channel IDs allowed delay). Note that logical channel IDs are identities for LTE radio bearers on MAC level. Maximum allowed delay value per logical channel ID shall be adjusted based on packet delay values defined for corresponding data bearer QCI "QoS class of identifier". Table 2 lists possible QCIs packet delay values for LTE EPS Bearers:

**Table 2: List of LTE EPS bearers configuration**

| QCI | Bearer Type | Priority | Packet Delay | Packet Loss | Example |
|---|---|---|---|---|---|
| 1 | GBR | 2 | 100 ms | 0,01 | VoIP call |
| 2 | GBR | 4 | 150 ms | 0,001 | Video call |
| 3 | GBR | 3 | 50 ms | 0,001 | Online gaming (real time) |
| 4 | GBR | 5 | 300 ms | 0,000001 | Video streaming |
| 5 | Non-GBR | 1 | 100 ms | 0,000001 | IMS signaling |
| 6 | Non-GBR | 6 | 300 ms | 0,000001 | Video, TCP based services, e.g. email, chat, ftp, etc. |
| 7 | Non-GBR | 7 | 100 ms | 0,001 | Voice, video, interactive gaming |
| 8 | Non-GBR | 8 | 300 ms | 0,000001 | Video, TCP based services, e.g. email, chat, ftp, etc. |
| 9 | Non-GBR | 9 | 300 ms | 0,000001 | Video, TCP based services, e.g. email, chat, ftp, etc. |

Both SRBs "Signaling Radio Bearers" and DRBs "Data Radio Bearers" with packet delay less than or equal 50ms (i.e. QCI3), delay SHALL NOT be applied on corresponding DL Data Transactions/TBs which have data on these bearers to avoid impacting there low packet delay requirements.

For other radio bearers, default delay value 4ms shall be applied, as based on statistics from field testing for LTE low throughput use cases the following was identified: More than 40% of DL data transactions is always followed by UL grant transaction within 4 ms and increasing more delay doesn't help much in consolidating more DL Data transactions. 4 ms shall be acceptable delay for most of latency non-critical radio bearers. Maximum allowed delay per QCI value, shall be possible to be readjusted by AP "Application Processor"/Higher Layers to CPS through NVRAM configuration or Configuration Interface. This shall provide high layers flexibility to readjust delay value per QCI value based on device needs. Once LTE DL TB "Transport Block"/PDU is received by PHY, based on logical channel IDs identified in TB MAC sub-headers, FW shall decide if delay on DL Data transaction shall be applied or not.

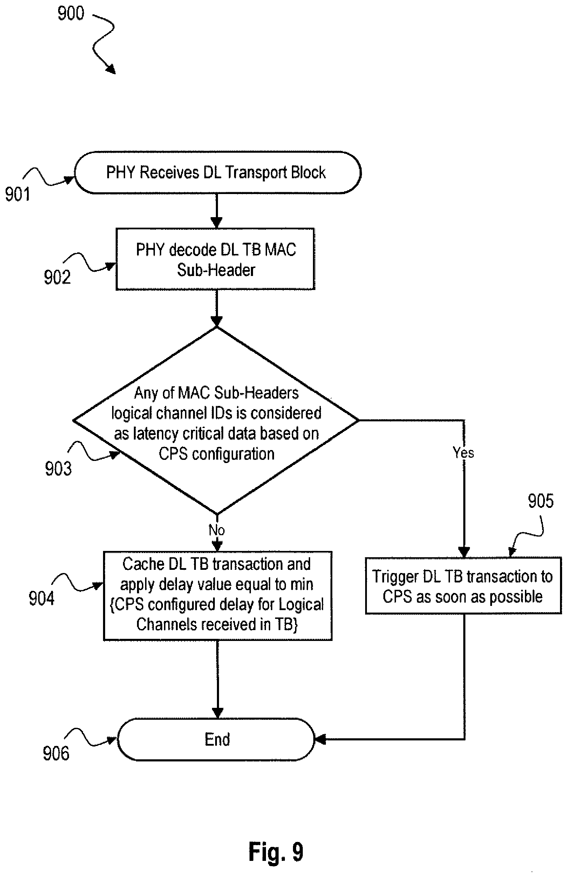

Fig. 9 is a schematic diagram illustrating a PHY algorithm (or method) 900 for delaying DL data transactions to CPS according to the disclosure.

The algorithm 900 includes the following blocks and functionalities: In a first block 901 PHY receives DL transport block. In a subsequent second block 902 PHY decodes DL TB MAC Sub-Header. In a subsequent third block 903 a check is performed if any of MAC Sub-Headers logical channel IDs is considered as latency critical data based on CPS configuration. If the answer is no, in a subsequent fourth block 904 DL TB transaction is cached and delay value is applied equal to minimum of CPS configured delay for logical channels received in TB and the algorithm goes to an end block 906. If the answer is yes, in a subsequent fifth block 905 DL TB transaction to CPS is triggered as soon as possible and the algorithm goes to the end block 906.

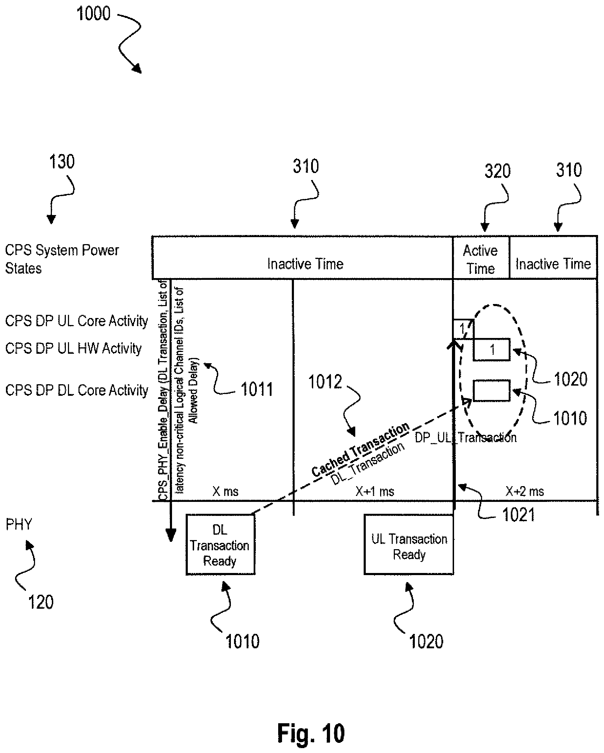

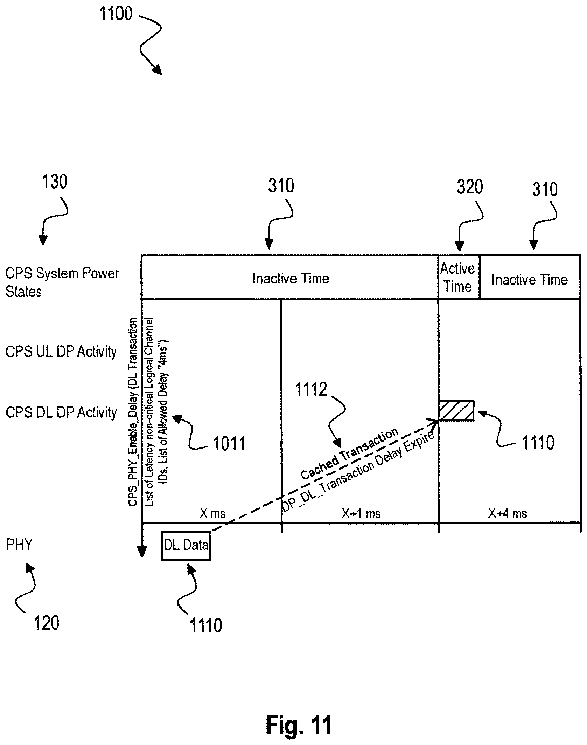

For DL Data transactions considered to be delayed, PHY shall delay these transactions until one of two scenarios occurs: Scenario#1 (depicted in Fig. 10): Latency critical transaction (e.g. UL Grant transaction) needs to be indicated to CPS. Scneario#2 (depicted in Fig. 11): Delay applied on DL Data transaction or other latency non-critical transaction expires (i.e. maximum allowed delay elapsed without occurrence of latency critical transaction)

Fig. 10 is a schematic diagram 1000 illustrating an Example for aligning DL data transaction with UL transaction assuming single core CPS system according to the disclosure.

After enabling delay configuration 1011 by CPS system 130, a DL transaction 1010 is cached 1012 until a latency critical UL transaction 1020 is ready. Both transactions 1010, 1020 are consolidated and transmitted together to CPS system 130 after waking up 1021 CPS system 130.

Fig. 11 is a schematic diagram 1100 illustrating an exemplary DL data transaction having delay timer expiry without occurrence of latency critical transaction according to the disclosure.

After enabling delay configuration 1011 by CPS system 130, a DL transaction 1110 is cached 1112 until an expiration of the delay value configured by message 1011 occurs. In response to an expiry of delay value the DL transaction 1110 is transmitted to CPS system 130 after waking up CPS system 130.

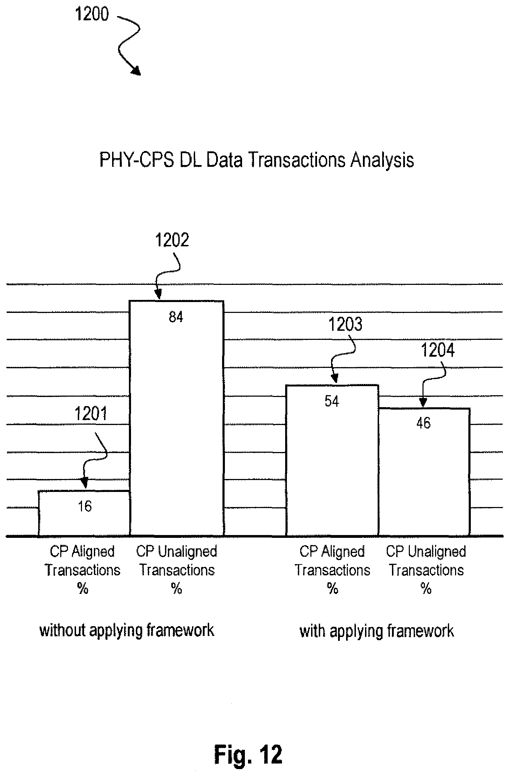

Fig. 12 is a histogram 1200 illustrating an analysis of PHY-CPS DL data transactions. The left two bars 1201 and 1202 illustrate results without applying the disclosed framework, where bar 1201 indicates consolidated transactions in % and bar 1202 indicates un-consolidated transactions in %. The right two bars 1203 and 1204 illustrate results with applying the disclosed framework, where bar 1203 indicates consolidated transactions in % and bar 1204 indicates un-consolidated transactions in %.

Based on a large number of LTE low throughput traces collected from field testing in different locations, the following results can be concluded. DL data transactions represents up to 38% of overall transactions to CPS. UL Grant transaction is most frequent latency critical transaction from PHY to CPS in such use cases: Only 16% of DL data transactions were aligned with UL Grant transactions (i.e. happening in same 1ms slot), all other DL data transactions (84%) required dedicated CPS system wake ups. 38% of these DL data transactions followed by UL grant transaction within time difference ranges between 1-4 ms.

Accordingly if 4 ms delay is applied, 38% of DL data transactions won't need a dedicated wake up for CPS system and accordingly expected CPS wake ups reduction can be up to 14%. I.e., 38% of CPS system wake ups of 38% DL data transactions can be avoided.

The second type of 2) Consolidating Control Plane non-critical transactions is described in the following.

As described above, PHY-CPS CP "Control Plane" transactions in low throughput use cases can have considerable frequency compared to DP "Data Plane" transactions which accordingly can have considerable contribution in CPS power consumption by having dedicated wake ups and active time for CPS system resources. As described above, the idea is to avoid having dedicated CPS wake ups and active time for CP latency non-critical transactions by applying configurable delay on these transactions to be consolidated with next latency critical PHY-CPS transaction (e.g. UL Grant transaction).

The following CP Transactions are Considered for Applying Delay: 1) EUTRA serving cell measurement report: PHY-CPS transaction through which PHY indicates CPS regarding serving cell(s) power values. 2) EUTRA intra and inter neighbor cells measurement report: PHY-CPS transaction through which PHY indicates CPS regarding EUTRA cells measurements (intra and inter measurements). 3) Measurements gaps: PHY-CPS transaction through which gaps (either MEAS Gap or DRX Gap) indicated by PHY to perform inter frequency or IRAT measurements by other PHYs.

An exemplary algorithm by which such a delay can be applied is described in the following.

Measurements Gaps Transactions: Maximum allowed delay for these transactions shall be applied directly by PHY based on gap start time. Once measurement gap transaction is ready in PHY to be reported to CPS, PHY shall adjust max possible delay value can be applied on transaction based on the following inputs: 1) Time remaining for gaps start; 2) CPS time needed to process transaction. This time processing value shall be configured by CPS; 3) Type of active measurements (e.g inter Frequency, IRAT) to consider other RAT PHY gap processing time needed. This time processing value shall be configured by CPS.

EUTRA serving cell, intra and inter neighbor cells measurement reports transactions: Decision of delaying these transactions will be based on serving cell power. CPS shall configure PHY with serving cell power thresholds and corresponding allowed max delay value. Once any of these transactions is ready to be reported to CPS, PHY shall check serving cell power value and based on which corresponding max allowed delay value shall be applied. Zero delay value means no delay is allowed to be applied on this transaction.

One implementation for delay configuration setting by CPS is as follows: Good Cell Quality Threshold: as long as serving cell power is equal to or greater than this threshold, 12 ms delay value shall be applied. As based on statistics from field testing for LTE low throughput use cases the following was identified: 1) Around 52% of these CP transactions are always followed by latency critical transaction (e.g. UL Grant Transaction) within 12 ms and increasing more delay doesn't consolidate much transactions. 2) Within good cell quality conditions, average periodicity of reporting serving and neighbor cell measurements is around 120 ms so introducing 12 ms delay (∼10% of periodicity) shouldn't causing any impact on system behavior. Below this threshold (i.e. serving cell quality is less than "Good Cell Quality Threshold"), no delay shall be applied on these CP transactions.

Once any of measurement reports transactions (serving or EUTRA measurements) shall be reported by PHY, PHY shall check serving cell quality and compare it to delay configured threshold from CPS. If serving cell power is better than or equal delay configured threshold then delay on transaction shall be applied.

Transactions Reporting Conditions: For CP latency non-critical transactions considered to be delayed, PHY shall delay these transactions until one of two scenarios occurs:

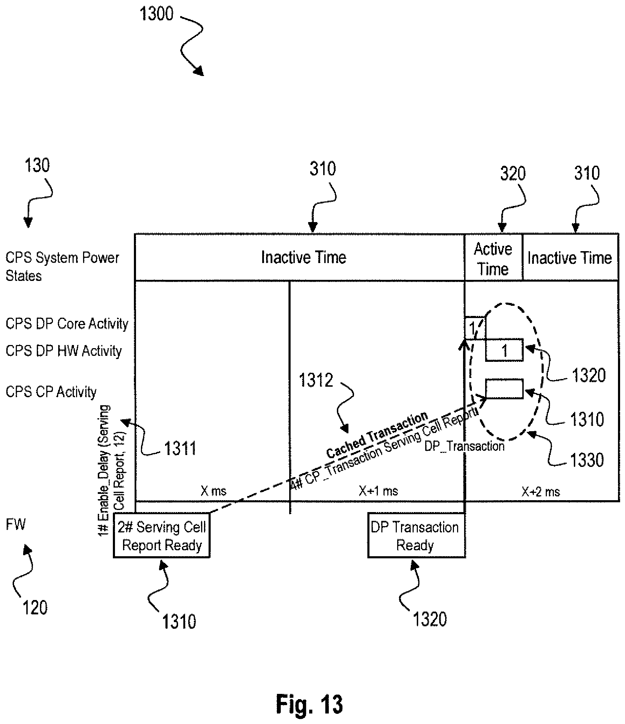

Scenario#1 (depicted in Fig. 13): Latency critical transaction (e.g. UL Grant transaction) needs to be indicated to CPS: Step#1: CPS enable CP_Transaction(Serving Cell Report) delay; Step#2: PHY in frame X requires to report serving cell measurement report, but since delay is enabled, PHY shall apply delay on transaction; Step#3: In frame X+2, DP transaction required to be triggered to CPS and accordingly FW wake up CPS system and provide DP transaction; Step#4: Since CPS system wake up triggered, FW shall provide any pending delayed transactions (i.e. CP Serving Cell Report transaction in this eample) to CPS.

Figure 13 illustrating Scenario#1 shows CP transaction 1310 and accordingly corresponding CPS activity was delayed till next DP transaction 1320 to CPS 130 and was executed in parallel to DP HW activity which is accordingly: Avoid dedicated wake up for CP transaction; Decreasing CPS overall active time by increasing CPS System resources utilization by performing CP transaction in parallel to DP HW activity as highlighted in Figure 13 by dotted oval 1330.

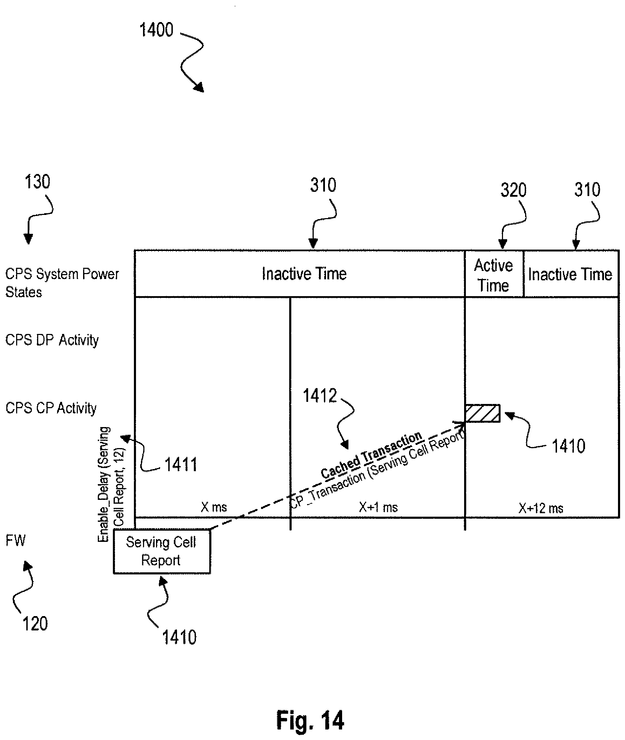

Scenario#2 (depicted in Fig. 14): Delay applied on CP transaction 1410 or other latency non-critical transaction elapses (i.e. max allowed delay elapsed without occurrence of latency critical transaction): Same as previous example (Scenario#1) shown in Fig. 13 without DP transaction triggered until 12 frames have elapsed and accordingly FW triggers CPS wake up to provide delayed CP transaction.

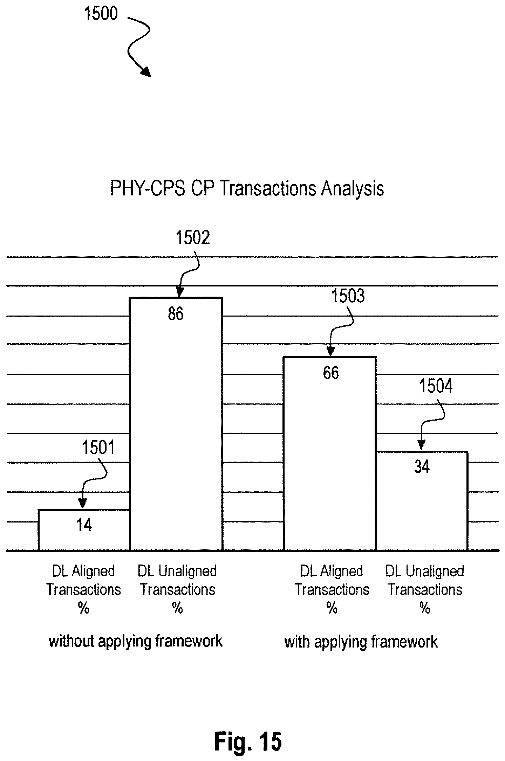

Fig. 15 is a histogram 1500 illustrating an analysis of PHY-CPS CP transactions. The left two bars 1501 and 1502 illustrate results without applying the disclosed framework, where bar 1501 indicates consolidated transactions in % and bar 1502 indicates un-consolidated transactions in %. The right two bars 1503 and 1504 illustrate results with applying the disclosed framework, where bar 1503 indicates consolidated transactions in % and bar 1504 indicates un-consolidated transactions in %.

Based on large number of LTE low throughput traces collected from field testing in different locations, the following results can be concluded. CP transactions represents up to 23% of overall transactions. Only 14% of these transactions were aligned with DP transactions. All other CP transactions (86%) required dedicated CPS system wake ups. 52% of these CP transactions followed by DP transactions within time 12 ms.

Accordingly in good cell conditions, if 12ms delay applied, 52% of CP transactions won't need dedicated wake up for CPS system and accordingly expected CPS system wake ups reduction can be up to 12%. I.e. 52% of CPS system wake ups of 23% CP transactions can be avoided.

Applying PHY-CPS transactions consolidation the disclosed framework on PHY-CPS periodic latency non-critical transactions, especially in low throughput use cases, which are one of most common use cases for mobile terminals, has considerable reduction in CPS system power consumption by either: 1) Reducing CPS System Wake Ups up to 26% (12% from CP transactions consolidation and 14% from DP DL data transactions consolidation) as described in details in the analysis above or 2) Reducing CPS System Active Time with also considerable percentage by considering parallel possible processing for consolidated transactions with latency critical transaction as highlighted in previous sections and shown in Fig. 6.

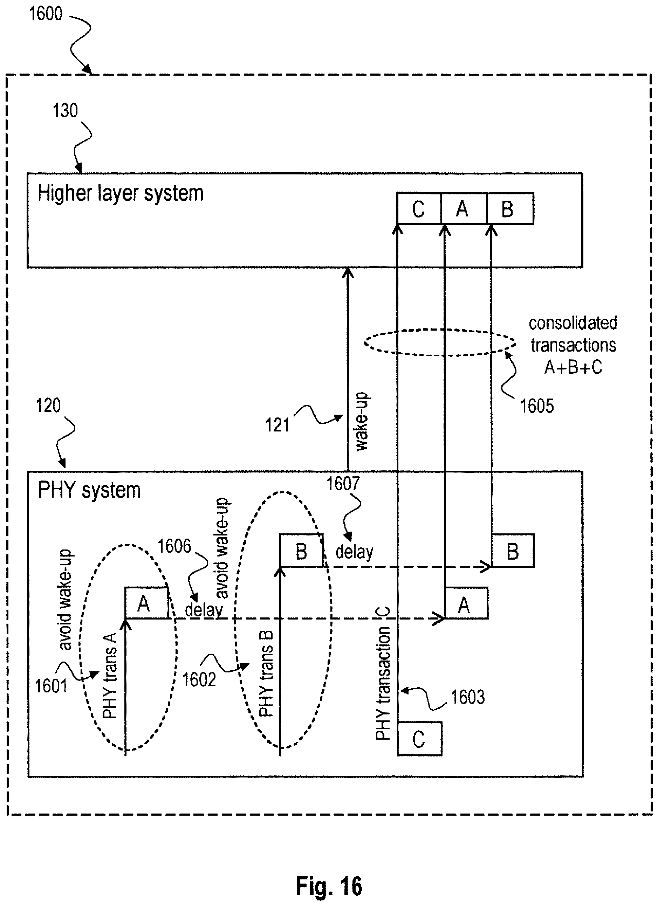

Fig. 16 is a schematic diagram illustrating a mobile device 1600 according to the disclosure consolidating transactions between PHY system 120 and higher layer system 130 based on a single wake-up message 121.

The mobile device 1600 includes a physical layer (PHY) system 120 for processing physical layer related operations; a higher layer system 130 for processing operations related to layers above the physical layer, e.g. operations of data link layer (layer 2), network layer (layer 3), transport layer (layer 4), session layer (layer 5); presentation layer (layer 6), application layer (layer 7) according to the OSI model; and a communication channel established between the PHY system 120 and the higher layer system 130 for reporting a plurality of transactions 1601, 1602, 1603 to the higher layer system 130. The PHY system 120 is configured to consolidate 1605 the plurality of transactions 1601, 1602, 1603 based on a single wake-up message 121 directed to the higher layer system 130.

This higher layer system 130 may include a cellular protocol stack (CPS) system as described above with respect to Figures 1 to 15. The wake-up message 121 is configured to wake-up the higher layer system 130 for processing the consolidated plurality of transactions 1605.

For example, the plurality of transactions 1601, 1602, 1603 may include at least one first type of latency critical transaction (in Figure 16 the PHY transaction C 1603) and at least one second type of non-latency critical transaction (in Figure 16 the PHY transaction A 1601 and the PHY transaction B 1602), e.g. as described above with respect to Figures 5 to 15. A timing response requirement for the latency-critical transaction 1603 may be for example more strict than a timing response requirement for the non-latency critical transaction 1601, 1602. The PHY system 120 may delay 1606, 1607 reporting a non-latency critical transaction 1601, 1602 until reporting a latency critical transaction 1603.

The higher layer system 130 may control the PHY system 120 enabling or disabling consolidation of the plurality of transactions 1601, 1602, 1603), e.g. as described above with respect to Figures 5 to 15.

The higher layer system 130 may enable the PHY system 120 consolidating transactions 1605 of a specific transaction type. The higher layer system 130 may be configured to indicate a delay value applicable for the specific transaction type to the PHY system 120, e.g. as described above with respect to Fig. 7. The PHY system 120 may be configured to activate consolidation 1605 of transactions 1601, 1602, 1603 of the specific transaction type based on the delay value indicated by the higher layer system 130, e.g. as described above with respect to Fig. 7. The delay value may be changeable in run-time either by the PHY system 120 or by the higher layer system 130.

The PHY system 120 may cache the transactions of the specific transaction type in a cache (memory) until a delaying condition is satisfied. Such delaying condition may be for example: an elapse of a delay time specified by the delay value for the specific transaction type, a latency critical transaction required to be reported to the higher layer system, and/or a power down requirement for the PHY system, e.g. as described above with respect to Fig. 9. The PHY system 120 may report the cached transactions of the specific transaction type to the higher layer system 130 when the delaying condition is fulfilled.

The concept presented in this disclosure can be applied to all Wireless Protocols (e.g., 2G/3G/4G/CDMA/Wifi) low throughput use cases, like VolTE, web-browsing, voice calls, chatting apps, etc.

Power consumption is one of key KPIs (Key Performance Indicators) for UE having special user attention. Applying the framework as described in this disclosure will improve CPS power consumption values especially in low throughput use cases which are most common use cases for UE (like VoLTE, web-browsing, chatting applications like WhatsApp, social media applications like Facebook). Improving power consumption in these use cases will give advantage versus other mobile devices not applying this framework for power consumption.

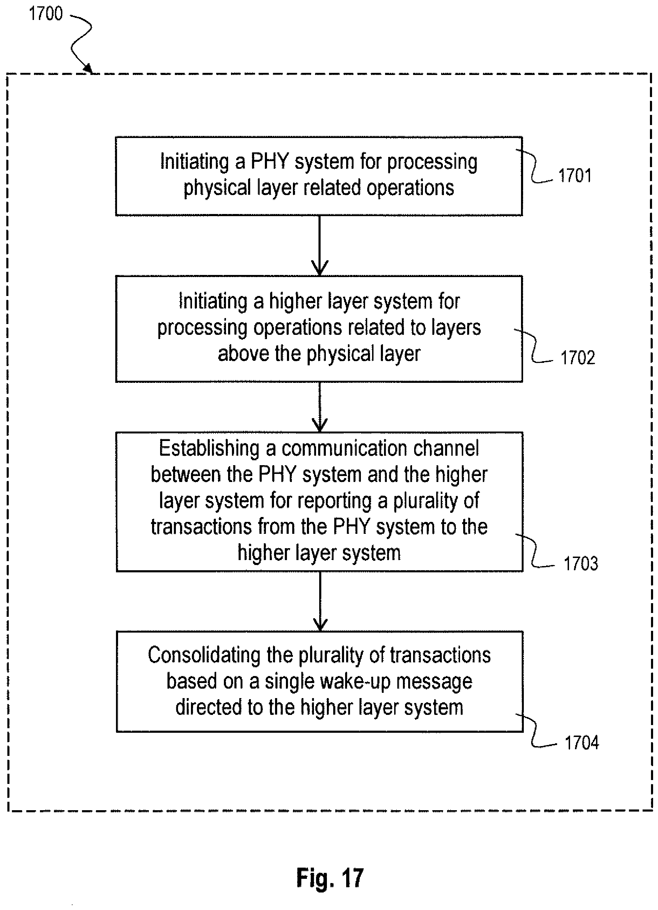

Fig. 17 is a schematic diagram illustrating a method 1700 for operating a mobile device, e.g. a mobile device 1600 as depicted in Fig. 16, according to the disclosure. The method 1700 may be processed by a mobile device 1600 as described above with respect to Fig. 16.

The method 1700 includes initiating 1701 a physical layer (PHY) system for processing physical layer related operations. The method 1700 further includes initiating 1702 a higher layer system for processing operations related to layers above the physical layer. The method 1700 further includes establishing 1703 a communication channel between the PHY system and the higher layer system for reporting a plurality of transactions from the PHY system to the higher layer system. The method 1700 further includes consolidating 1704 the plurality of transactions based on a single wake-up message directed to the higher layer system, e.g. as described above with respect to Figures 5 to 16.

The higher layer system may include a cellular protocol stack (CPS) system, e.g. as described above with respect to Figures 1 to 18. The wake-up message may be configured to wake-up the higher layer system for processing the consolidated plurality of transactions, e.g. as described above with respect to Figures 5 to 16.

The plurality of transactions may include at least one first type of latency critical transaction and at least one second type of non-latency critical transaction. A timing response requirement for the latency-critical transaction may be more strict than a timing response requirement for the non-latency critical transaction.

The method 1700 may include delaying reporting a non-latency critical transaction until reporting a latency critical transaction, e.g. as described above with respect to Figures 5 to 16. The method 1700 may include controlling an enabling or disabling of the consolidation of the plurality of transactions, e.g. as described above with respect to Figures 5 to 16.

The method 1700 may include enabling the consolidation of transactions of a specific transaction type, e.g. as described above with respect to Figures 5 to 16. The method 1700 may include indicating a delay value applicable for the specific transaction type to the PHY system. The method 1700 may include activating consolidation of transactions of the specific transaction type based on the indicated delay value. The delay value can be changed in run-time.

The method 1700 may include caching the transactions of the specific transaction type until a delaying condition is satisfied. The delaying condition may include an elapse of a delay time specified by the delay value for the specific transaction type, a latency critical transaction required to be reported to the higher layer system, and/or a power down requirement for the PHY system, e.g. as described above with respect to Figures 5 to 16. The method 1700 may further include reporting the cached transactions of the specific transaction type to the higher layer system when the delaying condition is fulfilled.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 1700 described above with respect to Fig. 17 and the computing blocks described above with respect to Figures 5 and 16. Such a computer program product may include a non-transient readable storage medium storing program code thereon for use by a processor, the program code comprising instructions for performing the methods or the computing blocks as described above.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A mobile device, comprising:
a physical layer (PHY) system (120) configured to process physical layer related operations;
a higher layer system (130) configured to process operations related to layers above the physical layer; and
a communication channel (222) established between the PHY system (120) and the higher layer system (130) for reporting a plurality of transactions (1601, 1602, 1603) to the higher layer system (130), wherein the plurality of transactions (1601, 1602, 1603) comprise at least one first type of latency critical transaction and at least one second type of non-latency critical transaction,
wherein the PHY system (120) is configured to consolidate the plurality of transactions (1601, 1602, 1603) based on a single wake-up message (121) directed to the higher layer system (130), and
wherein the PHY system (120) is configured to delay reporting a non-latency critical transaction until reporting a latency critical transaction.

2. The mobile device of claim 1,
wherein the higher layer system (130) comprises a cellular protocol stack (CPS) system.

3. The mobile device of claim 1 or 2,
wherein the wake-up message (121) is configured to wake-up the higher layer system (130) for processing the consolidated plurality of transactions (1605).

4. The mobile device of claim 1,
wherein a timing response requirement for the latency-critical transaction is more strict than a timing response requirement for the non-latency critical transaction.

5. The mobile device of one of the preceding claims,
wherein the higher layer system (130) is configured to control the PHY system (120) enabling or disabling consolidation of the plurality of transactions (1601, 1602, 1603).

6. The mobile device of one of the preceding claims,
wherein the higher layer system (130) is configured to enable the PHY system (120) consolidating transactions of a specific transaction type.

7. The mobile device of claim 6,
wherein the higher layer system (130) is configured to indicate a delay value applicable for the specific transaction type to the PHY system (120).

8. The mobile device of claim 7,
wherein the PHY system (120) is configured to activate consolidation of transactions of the specific transaction type based on the delay value indicated by the higher layer system (130).

9. The mobile device of claim 7 or 8,
wherein the delay value is changeable in run-time either by the PHY system (120) or by the higher layer system (130).

10. The mobile device of one of claims 6 to 9,
wherein the PHY system (120) is configured to cache the transactions of the specific transaction type until a delaying condition is satisfied.

11. A method for operating a mobile device, the method comprising:
initiating a physical layer (PHY) system (120) for processing physical layer related operations;
initiating a higher layer system (130) for processing operations related to layers above the physical layer;
establishing a communication channel (222) between the PHY system (120) and the higher layer system (130) for reporting a plurality of transactions (1601, 1602, 1603) from the PHY system (120) to the higher layer system (130), wherein the plurality of transactions (1601, 1602, 1603) comprise at least one first type of latency critical transaction and at least one second type of non-latency critical transaction;
consolidating the plurality of transactions (1601, 1602, 1603) based on a single wake-up message (121) directed to the higher layer system (130); and
delaying reporting a non-latency critical transaction until reporting a latency critical transaction.

12. The method of claim 11,
wherein the higher layer system (130) comprises a cellular protocol stack (CPS) system.

13. A computer readable non-transitory medium on which computer instructions are stored which when executed by a computer cause the computer to perform the method of claim 11 or 12.

## Patentansprüche

1. Mobile Einrichtung, die Folgendes umfasst:
ein Bitübertragungsschicht(PHY)-System (120), das dazu ausgelegt ist, Operationen in Bezug auf die Bitübertragungsschicht zu verarbeiten;
ein System höherer Schicht (130), das dazu ausgelegt ist, Operationen in Bezug auf Schichten über der Bitübertragungsschicht zu verarbeiten; und
einen Kommunikationskanal (222), der zwischen dem PHY-System (120) und dem System höherer Schicht (130) aufgebaut ist, zum Melden mehrerer Transaktionen (1601, 1602, 1603) zu dem System höherer Schicht (130), wobei die mehreren Transaktionen (1601, 1602, 1603) mindestens einen ersten Typ von latenzkritischer Transaktion und mindestens einen zweiten Typ von nicht-latenzkritischer Transaktion umfassen,
wobei das PHY-System (120) dazu ausgelegt ist, die mehreren Transaktionen (1601, 1602, 1603) basierend auf einer einzelnen Aufwecknachricht (121), die an das System höherer Schicht (130) gerichtet ist, zu konsolidieren, und
wobei das PHY-System (120) dazu ausgelegt ist, eine Meldung einer nicht-latenzkritischen Transaktion bis zur Meldung einer latenzkritischen Transaktion zu verzögern.

2. Mobile Einrichtung nach Anspruch 1,
wobei das System höherer Schicht (130) ein Mobilfunkprotokollstapel(CPS)-System umfasst.

3. Mobile Einrichtung nach Anspruch 1 oder 2,
wobei die Aufwecknachricht (121) dazu ausgelegt ist, das System höherer Schicht (130) zur Verarbeitung der mehreren konsolidierten Transaktionen (1605) aufzuwecken.

4. Mobile Einrichtung nach Anspruch 1,
wobei eine Timing-Antwortanforderung für die latenzkritische Transaktion strikter als eine Timing-Antwortanforderung für die nicht-latenzkritische Transaktion ist.

5. Mobile Einrichtung nach einem der vorhergeherden Ansprüche,
wobei das System höherer Schicht (130) dazu ausgelegt ist, das PHY-System (120) zu steuern, die Konsolidierung der mehreren Transaktionen (1601, 1602, 1603) ein- oder auszuschalten.

6. Mobile Einrichtung nach einem der vorhergeherden Ansprüche,
wobei das System höherer Schicht (130) dazu ausgelegt ist, dem PHY-System (120) zu ermöglichen, die Transaktionen eines spezifischen Transaktionstyps zu konsolidieren.

7. Mobile Einrichtung nach Anspruch 6,
wobei das System höherer Schicht (130) dazu ausgelegt ist, einen Verzögerungswert, der für den spezifischen Transaktionstyp anwendbar ist, dem PHY-System (120) anzuzeigen.

8. Mobile Einrichtung nach Anspruch 7,
wobei das PHY-System (120) dazu ausgelegt ist, die Konsolidierung von Transaktionen des spezifischen Transaktionstyps basierend auf dem durch das System höherer Schicht (130) angezeigten Verzögerungswert zu aktivieren.

9. Mobile Einrichtung nach Anspruch 7 oder 8,
wobei der Verzögerungswert während der Laufzeit entweder durch das PHY-System (120) oder durch das System höherer Schicht (130) änderbar ist.

10. Mobile Einrichtung nach einen der Ansprüche 6 bis 9,
wobei das PHY-System (120) dazu ausgelegt ist, die Transaktionen des spezifischen Transaktionstyps zu cachen, bis eine Verzögerungsbedingung erfüllt ist.

11. Verfahren zum Betreiben einer mobilen Einrichtung, wobei das Verfahren Folgendes umfasst:
Initiieren eines Bitübertragungsschicht(PHY)-Systems (120) zur Verarbeitung von Operationen in Bezug auf die Bitübertragungsschicht;
Initiieren eines Systems höherer Schicht (130) zur Verarbeitung von Operationen in Bezug auf Schichten über der Bitübertragungsschicht;
Aufbauen eines Kommunikationskanals (222) zwischen dem PHY-System (120) und dem System höherer Schicht (130) zum Melden mehrerer Transaktionen (1601, 1602, 1603) vom PHY-System (120) zum System höherer Schicht (130), wobei die mehreren Transaktionen (1601, 1602, 1603) mindestens einen ersten Typ von latenzkritischer Transaktion und mindestens einen zweiten Typ von nicht-latenzkritischer Transaktion umfassen;
Konsolidieren der mehreren Transaktionen (1601, 1602, 1603) basierend auf einer einzelnen Aufwecknachricht (121), die an das System höherer Schicht (130) gerichtet ist; und
Verzögern einer Meldung einer nicht-latenzkritischen Transaktion bis zur Meldung einer latenzkritischen Transaktion.

12. Verfahren nach Anspruch 11,
wobei das System höherer Schicht (130) ein Mobilfunkprotokollstapel(CPS)-System umfasst.

13. Computerlesbares nichtflüchtiges Medium, auf dem Computeranweisungen gespeichert sind, die bei Ausführung durch einen Computer bewirken, dass der Computer das Verfahren nach Anspruch 11 oder 12 durchführt.

## Revendications

1. Dispositif mobile, comprenant:
un système de couche physique (PHY) (120) configuré pour traiter des opérations associées à une couche physique;
un système de couches supérieures (130) configuré pour traiter des opérations associées à des couches au-dessus de la couche physique; et
une voie de communication (222) établie entre le système PHY (120) et le système de couches supérieures (130) pour signaler une pluralité de transactions (1601, 1602, 1603) au système de couches supérieures (130), la pluralité de transactions (1601, 1602, 1603) comprenant au moins un premier type de transaction critique pour la latence et au moins un deuxième type de transaction non critique pour la latence,
dans lequel le système PHY (120) est configuré pour consolider la pluralité de transactions (1601, 1602, 1603) sur la base d'un seul message de réveil (121) envoyé au système de couches supérieures (130), et
dans lequel le système PHY (120) est configuré pour retarder le signalement d'une transaction non critique pour la latence jusqu'au signalement d'une transaction critique pour la latence.

2. Dispositif mobile de la revendication 1,
dans lequel le système de couches supérieures (130) comprend un système de pile de protocoles cellulaires (CPS).

3. Dispositif mobile de la revendication 1 ou 2,
dans lequel le message de réveil (121) est configuré pour réveiller le système de couches supérieures (130) pour le traitement de la pluralité de transactions consolidées (1605) .

4. Dispositif mobile de la revendication 1,
dans lequel une exigence de réponse de minutage pour la transaction critique pour la latence est plus stricte qu'une exigence de réponse de minutage pour la transaction non critique pour la latence.

5. Dispositif mobile d'une des revendications précédentes,
dans lequel le système de couches supérieures (130) est configuré pour contrôler l'activation ou la désactivation, par le système PHY (120), de la consolidation de la pluralité de transactions (1601, 1602, 1603).

6. Dispositif mobile d'une des revendications précédentes,
dans lequel le système de couches supérieures (130) est configuré pour activer la consolidation, par le système PHY (120), de transactions d'un type de transaction spécifique.

7. Dispositif mobile de la revendication 6,
dans lequel le système de couches supérieures (130) est configuré pour indiquer une valeur de retard applicable au type de transaction spécifique au système PHY (120).

8. Dispositif mobile de la revendication 7,
dans lequel le système PHY (120) est configuré pour activer la consolidation de transactions du type de transaction spécifique sur la base de la valeur de retard indiquée par le système de couches supérieures (130).

9. Dispositif mobile de la revendication 7 ou 8,
dans lequel la valeur de retard est modifiable pendant le temps d'exécution par le système PHY (120) ou par le système de couches supérieures (130).

10. Dispositif mobile d'une des revendications 6 à 9,
dans lequel le système PHY (120) est configuré pour mettre en mémoire cache les transactions du type de transaction spécifique jusqu'à ce qu'une condition de retard soit satisfaite.

11. Procédé de fonctionnement d'un dispositif mobile, le procédé comprenant:
l'initiation d'un système de couche physique (PHY) (120) pour le traitement d'opérations associées à une couche physique;
l'initiation d'un système de couches supérieures (130) pour le traitement d'opérations associées à des couches au-dessus de la couche physique;
l'établissement d'une voie de communication (222) entre le système PHY (120) et le système de couches supérieures (130) pour le signalement d'une pluralité de transactions (1601, 1602, 1603) par le système PHY (120) au système de couches supérieures (130), la pluralité de transactions (1601, 1602, 1603) comprenant au moins un premier type de transaction critique pour la latence et au moins un deuxième type de transaction non critique pour la latence;
la consolidation de la pluralité de transactions (1601, 1602, 1603) sur la base d'un seul message de réveil (121) envoyé au système de couches supérieures (130) ; et
le retardement du signalement d'une transaction non critique pour la latence jusqu'au signalement d'une transaction critique pour la latence.

12. Procédé de la revendication 11,
dans lequel le système de couches supérieures (130) comprend un système de pile de protocoles cellulaires (CPS).

13. Support non transitoire lisible par ordinateur sur lequel sont stockées des instructions informatiques qui, lorsqu'elles sont exécutées par un ordinateur, conduisent l'ordinateur à effectuer le procédé de la revendication 11 ou 12.
